# EUROPÄISCHE PATENTSCHRIFT

(11) **EP 2 128 458 B1**
(45) Veröffentlichungstag und Bekanntmachung des Hinweises auf die Patenterteilung: **02.01.2013**
(21) Anmeldenummer: 09158727.9
(22) Anmeldetag: 24.04.2009
(51) Int. Cl.: F16B 13/14, F16B 35/04

(54) **Befestigungselement**
Fastening element
Elément de fixation

(30) Priorität: 21.05.2008 DE 102008001903
(43) Veröffentlichungstag der Anmeldung: 02.12.2009
(73) Patentinhaber: HILTI Aktiengesellschaft, 9494 Schaan (LI)
(72) Erfinder: Ginter, Herbert, 87656, Germaringen (DE)
(74) Vertreter: Söllner, Oliver

(56) Entgegenhaltungen:
- DE-A1- 3 014 078
- US-A- 5 807 051

## Beschreibung

Die Erfindung betrifft ein Befestigungselement zur Verankerung in einem Bohrloch mittels einer aushärtbaren Masse mit einem sich entlang einer Längsachse erstreckenden Schaft und mit einer Mischeinrichtung entsprechend den Merkmalen des Oberbegriffs aus Anspruch 1 (DE 3014078 A1).

Zur chemischen Verankerung eines Befestigungselementes, wie einer Ankerstange, einer Gewindestange, einer Gewindehülse, einem Schraubanker oder einem Bewehrungseisen, in einem Untergrund, wie einem Bauteil oder Werkstück, wird ein Bohrloch erstellt, dieses gereinigt und mit einer aushärtbaren, vorteilhaft mehrkomponentigen Masse, z. B. einer zweikomponentigen Mörtelmasse, befüllt. Dann wird das Befestigungselement in das befüllte Bohrloch gesetzt. Nach dem Aushärten der Masse weist das Befestigungselement hohe Lastwerte auf. Derartige Befestigungselemente sind, gegenüber mechanisch verankerten Befestigungselementen, ohne Spreizkräfte im Untergrund verankert, so dass kleine Rand- und Achsabstände der verankerten Befestigungselemente im Untergrund möglich sind. Am freien Ende des im Untergrund verankerten Befestigungselementes werden Anbauteile beispielsweise über Muttern am Untergrund festgelegt.

Aus der EP 0 150 555 A1 ist ein Befestigungselement mit einer Mischschneide als Mischeinrichtung bekannt, wobei das Befestigungselement in ein mit einer Patrone bestücktes Bohrloch eingebracht wird. Beim Eindrehen des Befestigungselementes z. B. mittels einer Drehantriebseinrichtung wird die Patrone zerstört und die Komponenten der aushärtbaren, mehrkomponentigen Masse dabei durchmischt.

Wie z. B. in der DE 34 42 383 A1 dargelegt ist, wurde es bis anhin in der Fachwelt als wesentlich angesehen, vor dem Einbringen der aushärtbaren, mehrkomponentigen Masse das Bohrloch zu reinigen, was einen erheblichen Aufwand, insbesondere bei Serienanwendungen, zur Erstellung der Verankerungen bedeutet.

Aufgabe der Erfindung ist es, ein mittels einer aushärtbaren Masse in einem Bohrloch verankerbares Befestigungselement zu schaffen, das in ein vorgängig nicht gereinigtes Bohrloch setzbar ist, wobei trotzdem ausreichend hohe Lastwerte erreichbar sind.

Die Aufgabe ist durch die Merkmale der unabhängigen Ansprüche gelöst. Vorteilhafte Weiterbildungen sind in den Unteransprüchen dargelegt.

Gemäss der Erfindung ist eine Profilierungseinrichtung mit den Merkmalen aus Anspruch 1 vorgesehen.

Damit ist an dem Befestigungselement nicht nur ein Mischbereich sondern auch ein Profilierungsbereich vorgesehen, der zudem eine Reinigungsfunktion für das Bohrloch übernimmt. Beim Setzen des Befestigungselementes wird die zuvor in das Bohrloch eingebrachte aushärtbare Masse durchmischt und gleichzeitig die Bohrlochwandung profiliert. Dabei wird allfällig an der Bohrlochwandung befindlicher Bohrstaub, Feuchtigkeit und/oder andere Trennmittel zumindest teilweise von dieser entfernt, womit zumindest eine Teilreinigung des Bohrlochs erfolgt. Die Kraftübertragung wird einerseits durch den Formschluss der ausgehärteten Masse mit der Bohrlochwandung und andererseits durch Adhäsion der ausgehärteten Masse mit dem Untergrund sichergestellt. Da durch die Profilierungseinrichtung die Oberflächenrauhigkeit der Bohrlochwandung einerseits der Formschluss und durch den dabei bedingten Reinigungseffekt andererseits die Adhäsion jeweils zwischen der ausgehärteten Masse und der Bohrlochwandung verbessert ist, wird die Übertragung höherer Lastwerte von dem Befestigungselement in den Untergrund ermöglicht, obwohl auf eine separate Reinigung des Bohrlochs verzichtet wurde.

Das beim Bohren anfallende Bohrmehl beziehungsweise Bohrklein verbleibt beim Einbringen der aushärtbaren Masse in dem Bohrloch. Die Bearbeitung des Bohrlochs und die Teilreinigung zumindest der Bohrlochwandung durch die Profilierungseinrichtung erfolgen beim Setzen des Befestigungselementes und zwar gleichzeitig mit dem Mischen der aushärtbaren, vorteilhaft mehrkomponentigen Masse. Da diese Bearbeitungsvorgänge in einem Schritt erfolgen, reduziert sich der Aufwand zur Herstellung einer chemischen Verankerung mit einem derartigen Befestigungselement gegenüber den bisher bekannten Lösungen massgeblich.

Das Befestigungselement wird vorteilhaft maschinell mit einer Drehantriebseinrichtung, wie z. B. einem Bohrhammer oder einem Schrauber, in das Bohrloch eingedreht, wobei das Befestigungselement beispielsweise direkt in einer Werkzeugaufnahme der Drehantriebseinrichtung angeordnet ist. Nach dem Erreichen der erforderlichen Verankerungstiefe wird die Drehantriebseinrichtung von dem Befestigungselement entkuppelt. Nach Ablauf der temperaturabhängigen Aushärtezeit der aushärtbaren Masse ist am freien, aus dem Untergrund herausragenden Ende des Befestigungselementes ein Anbauteil am Untergrund befestigbar.

Mehrere Komponenten einer aushärtbaren, mehrkomponentigen Masse sind unvermischt in das Bohrloch einbringbar, so dass auf eine dem Bohrloch vorgeschaltete Mischeinrichtung an der Auspressvorrichtung verzichtet werden kann. Dies reduziert den erforderlichen Kraftaufwand zum Ausbringen der Komponenten mittels eines Auspressgerätes massgeblich. Die Mischeinrichtung am Befestigungselement gewährleistet eine ausreichende Durchmischung der Komponenten der aushärtbaren Masse wie auch eine Untermischung eines Teils des im Bohrloch befindlichen Bohrmehls beziehungsweise Bohrkleins in die aushärtbare Masse. Da die Komponenten nur in einem begrenzten Bereich miteinander reagieren, erhöht sich die zur Verfügung stehende Verarbeitungszeit, in welcher das Befestigungselement in das Bohrloch eingebracht werden muss, gegenüber einer bereits beim Einbringen in das Bohrloch vermischten aushärtbaren Masse massgeblich, was besonders bei Serienanwendungen, in denen mehrere Befestigungselemente gesetzt werden müssen, vorteilhaft ist. Zudem findet keine oder nur eine beschränkte Aushärtung der Komponenten im Injektionsrohr statt, was die Mörtelverluste und die Menge des anfallenden Abfalls reduziert. Weiter ist ein Injektionsrohr ohne Statikmischer wesentlich günstiger herstellbar als ein solches mit einem Statikmischer, womit sich die Kosten für die Herstellung der Verankerung massgeblich senken lassen. Des Weiteren ermöglicht die Entkopplung von Verarbeitungszeit und Aushärtezeit der aushärtbaren, mehrkomponentigen Masse die Verwendung von schneller aushärtenden Massen.

Vorzugsweise entspricht die maximale radiale Erstreckung der Profilierungseinrichtung im Bereich der radial abragenden Profilierungsabschnitten dem 1.02- bis 1.2-fachen des Nenndurchmessers des Bohrlochs. Durch das Übermass der Profilierungseinrichtung gegenüber dem Bohrloch wird eine ausreichende Profilierung der Bohrlochwandung beim Eindrehen beziehungsweise beim Setzen des Befestigungselementes in das Bohrloch gewährleistet.

Bevorzugt sind die Mischeinrichtung und die Profilierungseinrichtung an einem separaten Element vorgesehen, das einen Kupplungsabschnitt zur Kupplung mit dem Befestigungselement aufweist. Das separate Element ist bedarfsweise an dem Befestigungselement anordnenbar. In Abhängigkeit der Ausgestaltung des Bohrlochs, insbesondere in Bezug auf dessen Nenndurchmesser, wird das entsprechende, die Mischeinrichtung und die Profilierungseinrichtung umfassende Element an dem Befestigungselement vorgesehen.

Vorzugsweise umfasst der Kupplungsabschnitt einen Gewindeabschnitt, der mit einem Gegengewindeabschnitt am Befestigungselement verschraubbar ist, was eine einfache und sichere beziehungsweise unverlierbare Anordnung des separaten Elementes an dem Befestigungselement gewährleistet. Diese Ausführung des separaten Elementes ist insbesondere in Verbindung mit einer Gewindestange als Befestigungselement vorteilhaft. Alternativ sind der Kupplungsabschnitt und der Gegenkupplungsabschnitt Teile einer Steckverbindung zum reib- und/oder formschlüssigen Verbinden des Befestigungselementes und des separaten Elementes. Weiter kann das separate Element auch mittels eines separaten Befestigungsmittels, wie z. B. eine Schraube oder ein Niet, am Befestigungselement befestigt sein.

Bevorzugt weist die Mischeinrichtung radial abragende Flügelelemente und vorteilhaft eine flächige Ausgestaltung auf, wobei hier radial auf die Längsachse des Befestigungselementes bezogen ist. Diese Mischeinrichtung gewährleistet auf eine vorteilhafte Art eine ausreichende Durchmischung der Komponenten der aushärtbaren Masse und die Untermischung zumindest eines Teils des im Bohrloch befindlichen Bohrmehls beziehungsweise Bohrkleins in die aushärtbare Masse.

Vorzugsweise sind die radial abragenden Profilierungsabschnitte Gewindeabschnitte, welche sich beim Eindrehen des Befestigungselementes in das Bohrloch in dessen Wandung furchen. Die Gewindeabschnitte sind vorteilhaft entsprechend einem selbstfurchenden Gewinde ausgebildet, wie es aus dem technischen Gebiet der selbstfurchenden Betonschrauben bekannt ist.

Vorzugsweise sind die radial abragenden Profilierungsabschnitte radial federnd gelagert. Die Profilierungsabschnitte sind beispielsweise zumindest begrenzt radial nach innen auslenkbar und/oder besonders vorteilhaft nach radial aussen federbeaufschlagt, so dass die Profilierungsabschnitte während dem gesamten Eindrehvorgang des Befestigungselementes mit der Bohrlochwand in Kontakt sind und diese entsprechend profilieren.

Bevorzugt weist die Profilierungseinrichtung einen Bodenabschnitt auf, von dem Distanzabschnitte abragen, an deren freien Enden jeweils zumindest einer der radial abragenden Profilierungsabschnitte vorgesehen ist. Der Bodenabschnitt der Profilierungseinrichtung erstreckt sich vorteilhaft entlang einer radial von der Längsachse des Befestigungselementes abragenden Ebene. Dies ermöglicht eine vorteilhafte Profilierung der Bohrlochwandung, da die Profilierungseinrichtung beabstandet von der Mischeinrichtung zu liegen kommt. Vorteilhaft ist die Mischeinrichtung, in Bezug auf die Setzrichtung, vor der Profilierungseinrichtung vorgesehen. In einer weiteren vorteilhaften Variante kann jedoch die Profilierungseinrichtung auch vor der Mischeinrichtung liegen, so dass vor dem eigentlichen Durchmischen der aushärtbaren Masse die Bohrlochwandung bereits profiliert wird. Einander zugewandte Distanzabschnitte bilden eine Aufnahme für ein Ende des Befestigungselementes aus.

Vorzugsweise sind die radial abragenden Profilierungsabschnitte relativ zueinander axial versetzt, womit die Profilierungseinrichtung eine Steigung aufweist. Diese Steigung bestimmt die Setzgeschwindigkeit des Befestigungselementes und damit die Mischintensität beim Durchmischen der aushärtbaren Masse sowie beim Untermischen zumindest eines Teils des im Bohrloch befindlichen Bohrmehls beziehungsweise Bohrkleins.

Bevorzugt weisen zumindest die radial abragenden Profilierungsabschnitte eine Härte von zumindest 700 HV auf, womit diese eine ausreichende Härte für eine vorteilhafte Profilierung der Bohrlochwandung auch in mineralischen Untergründen, wie Beton, aufweisen.

Vorteilhaft ist zumindest die Profilierungseinrichtung als Stanz-Biegeteil aus einem Blech gefertigt, was eine einfache Herstellung derselben gewährleistet. Ist die Profilierungseinrichtung ein Teil eines separaten Elementes, das z. B. auch die Mischeinrichtung umfasst, so ist dieses separate Element als Ganzes z. B. auch als Stanz-Biegeteil ausgebildet. Das separate Element kann ein- oder mehrteilig sein.

Die Erfindung wird nachstehend anhand von Ausführungsbeispielen näher erläutert. Es zeigen:
- Fig. 1: Ein erstes Ausführungsbeispiel eines Elementes mit einer Mischeinrichtung und einer Profilierungseinrichtung in Seitenansicht;
- Fig. 2: das Setzverfahren in einem schematischen Längsschnitt; und
- Fig. 3: ein zweites Ausführungsbeispiel eines Elementes mit einer Mischeinrichtung und einer Profilierungseinrichtung in Seitenansicht

Grundsätzlich sind in den Figuren gleiche Teile mit den gleichen Bezugszeichen versehen.

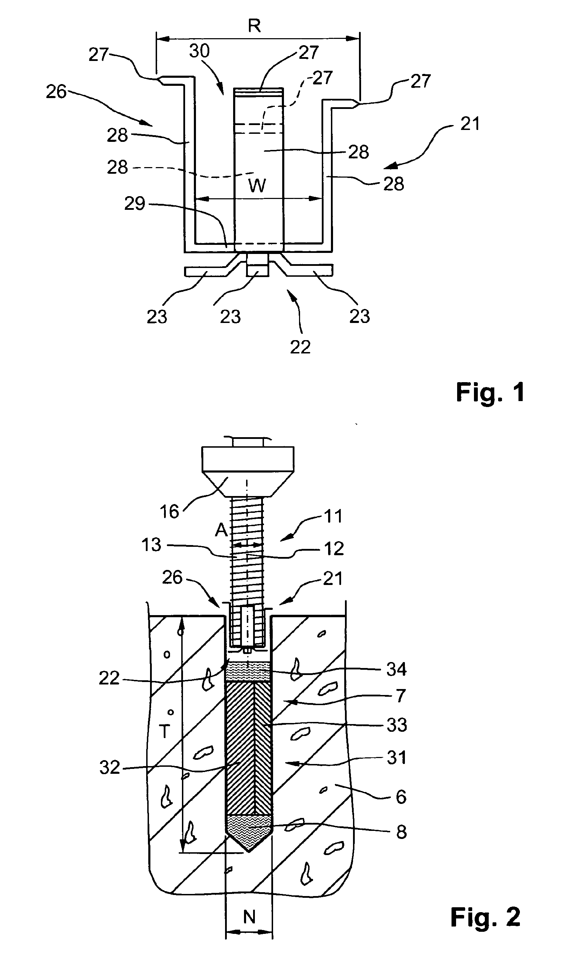

Das in Figur 1 dargestellte Element 21 weist eine Mischeinrichtung 22 und eine Profilierungseinrichtung 26 auf. Die Mischeinrichtung 22 wie auch die Profilierungseinrichtung 26 sind Stanz-Biegeteile aus Blech, die miteinander zu dem Element 21 verbunden sind. Die Mischeinrichtung 22 weist eine flächige Ausgestaltung mit mehreren, radial abragenden Flügelelementen 23 auf.

Die zusätzlich vorgesehene Profilierungseinrichtung 26 weist einen entlang einer quer zur Längsachse 12 eines mit dem Element 21 kuppelbaren Befestigungselementes 11 verlaufenden Ebene erstreckenden Bodenabschnitt 29, von diesem abragende Distanzabschnitte 28 mit radial abragenden Profilierungsabschnitten 27 an deren freien Enden auf. Die maximale radiale Erstreckung R der Profilierungseinrichtung 26 im Bereich der radial abragenden Profilierungsabschnitte 27 entspricht dem 1.02- bis 1.2-fachen des Nenndurchmessers N des Bohrlochs 7 im Untergrund 6, wie z. B. eine Betondecke. Die radial abragenden Profilierungsabschnitte 27 sind radial federnd gelagert. Weiter sind die radial abragenden Profilierungsabschnitte 27 relativ zueinander in Bezug auf den Bodenabschnitt 29 axial versetzt, womit diese eine Steigung aufweisen, welche die Setzgeschwindigkeit des Befestigungselementes 11 beim Eindrehen in das Bohrloch 7 und damit die Mischintensität bestimmen. Zumindest die radial abragenden Profilierungsabschnitte 27 weisen vorteilhaft eine Härte von zumindest 700 HV auf.

Die einander zugewandten Distanzabschnitte 28 bilden eine Aufnahme als Kupplungsabschnitt 30 des Elementes 21, so dass bei der Anordnung des Elementes 21 an einem Ende des Befestigungselementes 11 die Distanzabschnitte 28 dieses Ende bereichsweise umgreifen. Das Element 21 wird beispielsweise auf das Ende des Befestigungselementes 11 aufgesteckt oder mittels einer Schraubbewegung an diesem angeordnet. Die lichte Weite W zwischen zwei Distanzabschnitten 28 ist vorteilhaft zumindest bereichsweise kleiner als der Aussendurchmesser A des Befestigungselementes 11.

Bei dem in der Figur 2 nur in einem Einzelschritt schematisch dargestellten Setzverfahren zum Setzen des Befestigungselementes 11 wird vorgängig, hier nicht dargestellt, ein Bohrloch 7 in den Untergrund 6 mit einem Bohrer, z. B. mit einem Hammerbohrer, erstellt, wobei das Bohrloch 7 mit einer Tiefe T erstellt wird, die 5% bis 15% tiefer als die erforderliche Verankerungslänge des Befestigungselementes 11 ist. Das beim Bohren anfallende Bohrmehl beziehungsweise Bohrklein 8 verbleibt im Bohrloch 7.

Ohne zuvor das Bohrloch 7 zu reinigen, wird anschliessend das Bohrloch 7 mit einem hier nicht dargestellten Auspressgerät mit einer aushärtbaren, mehrkomponentigen Masse 31 befüllt, wobei die beiden Komponenten, das Harz 32 und der Härter 33, der aushärtbaren Masse 31 unvermischt in das Bohrloch 7 eingebracht werden. Optional kann anschliessend zusätzlich eine definierte Menge eines Füllstoffs 34 in das Bohrloch 7 eingebracht werden. Beim Einbringen der aushärtbaren Masse 31 in das Bohrloch 7 ist vorteilhafterweise darauf zu achten, dass die Verfüllung vom Bohrlochtiefsten her und blasenfrei erfolgt. Die einzubringende Menge der aushärtbaren Masse 31 ist von dem zwischen dem Bohrloch 7 und dem Befestigungselement 11 verbleibenden Volumen abhängig. Beispielsweise wird das Bohrloch 7 zur Hälfte oder zu zwei Dritteln mit der aushärtbaren Masse 31 verfüllt.

Nach der Anordnung des Elementes 21 an einem Ende eines Befestigungselementes 11, das einen sich entlang einer Längsachse 12 erstreckenden Schaft 13 aufweist, wird das Befestigungselement 11 mit dem Element 21 voran in das Bohrloch 7 eingeführt und maschinell in das befüllte Bohrloch 7 mit einem Bohrhammer als Drehantriebseinrichtung bis zum Erreichen der erforderlichen Verankerungslänge des Befestigungselementes 11 eingedreht. Von der Drehantriebseinrichtung ist in Fig. 1 einzig die Werkzeugaufnahme 16 dargestellt. Dabei werden das Harz 32, der Härter 33 sowie ein Teil des im Bohrloch befindlichen Bohrmehls beziehungsweise Bohrkleins 8 miteinander vermischt. Gleichzeitig wird die Wandung des Bohrlochs 7 von den radial abragenden Profilierungsabschnitten 27 des Elementes 21 zur Erzeugung von Hinterschnitten profiliert.

Vorteilhaft wird als Befestigungselement 11 eine mit einem Rechtsgewinde versehene Gewindestange verwendet, die linksdrehend oder rechtsdrehend in das Bohrloch 7 eingedreht wird. Durch das Rechtsgewinde wird beim linksdrehenden Eindrehen des Befestigungselementes 11 die aushärtbare Masse 31 in das Bohrloch 7 gefördert und dadurch eine gewisse Verpressung der aushärtbaren Masse 31 sowie des am Bohrlochgrund befindlichen Bohrmehls beziehungsweise Bohrkleins 8 im Bohrloch 7 erreicht.

Nach Erreichen der erforderlichen Verankerungslänge des Befestigungselementes 11 wird die Drehantriebseinrichtung von dem Befestigungselement 11 entkoppelt. Nach dem Aushärten der aushärtbaren Masse 31 kann am freien Ende des Befestigungselementes 11 ein hier nicht dargestelltes Anbauteil am Untergrund 6 befestigt werden.

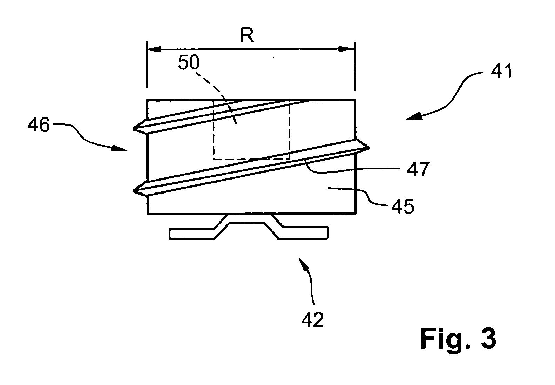

Das in Figur 3 dargestellte Element 41 umfasst einen Grundkörper 45 an dessen einen Ende eine Mischeinrichtung 42 und am gegenüberliegenden Ende eine Sacklochbohrung mit einem Innengewinde als Kupplungsabschnitt 50 vorgesehen ist. Zum Anordnen des Elementes 41 an dem Befestigungselement 11 wird dieses mit seinem Kupplungsabschnitt 50 auf das entsprechende Ende des Befestigungselementes 11, wie z. B. eine Gewindestange, aufgeschraubt.

Umfänglich verläuft ein selbstfurchendes Gewinde, welches die radial abragenden Profilierungsabschnitte 47 bildet. Vorteilhaft ist das ganze Element 41 beziehungsweise die radial abragenden Profilierungsabschnitte 47 gehärtet oder aus einem Material gefertigt, das eine ausreichende Härte zur Profilierung der Wandung des Bohrlochs 7 aufweist. Vorteilhaft beträgt die Härte zumindest der radial abragenden Profilierungsabschnitte 47 zumindest 700 HV.

## Patentansprüche

1. Befestigungselement zur Verankerung in einem Bohrloch (7) mittels einer aushärtbaren Masse (31) mit einem sich entlang einer Längsachse (12) erstreckenden Schaft (13), mit einer Mischeinrichtung (22; 42) und mit einer Profilierungseinrichtung (26; 46) mit radial abragenden Profilierungsabschnitten (27; 47), **dadurch gekennzeichnet, dass**
die Mischeinrichtung (22; 42) radial abragende Flügelelemente (23) aufweist, die flächig ausgebildet sind, und
dass die radial abragenden Profilierungsabschnitte (27) relativ zueinander axial versetzt sind.

2. Befestigungselement nach Anspruch 1, **dadurch gekennzeichnet, dass** die maximale radiale Erstreckung (R) der Profilierungseinrichtung (26; 46) im Bereich der radial abragenden Profilierungsabschnitte (27; 47) dem 1.02- bis 1.2-fachen des Nenndurchmessers (N) des Bohrlochs (7) entspricht.

3. Befestigungselement nach Anspruch 1 oder 2, **dadurch gekennzeichnet, dass** die Mischeinrichtung (22; 42) und die Profilierungseinrichtung (26; 46) an einem separaten Element (21; 41) vorgesehen sind, das einen Kupplungsabschnitt (30; 50) zur Kupplung mit dem Befestigungselement (11) aufweist.

4. Befestigungselement nach Anspruch 3, **dadurch gekennzeichnet, dass** der Kupplungsabschnitt (50) einen Gewindeabschnitt umfasst, der mit einem Gegengewindeabschnitt am Befestigungselement (11) verschraubbar ist.

5. Befestigungselement nach einem der Ansprüche 1 bis 4, **dadurch gekennzeichnet, dass** die radial abragenden Profilierungsabschnitte (47) Gewindeabschnitte sind.

6. Befestigungselement nach einem der Ansprüche 1 bis 4, **dadurch gekennzeichnet, dass** die radial abragenden Profilierungsabschnitte (27) radial federnd gelagert sind.

7. Befestigungselement nach einem der Ansprüche 1 bis 6, **dadurch gekennzeichnet, dass** die Profilierungseinrichtung (26) einen Bodenabschnitt (29) aufweist, von dem Distanzabschnitte (28) abragen, an deren freien Enden jeweils zumindest einer der radial abragenden Profilierungsabschnitte (27) vorgesehen ist.

8. Befestigungselement nach einem der Ansprüche 1 bis 7, **dadurch gekennzeichnet, dass** zumindest die radial abragenden Profilierungsabschnitte (27; 47) eine Härte von zumindest 700 HV aufweisen.

## Claims

1. Fastening element for anchoring in a bore hole (7) by means of a curable compound (31), comprising a shaft (13) extending along a longitudinal axis (12) and a mixing device (22; 42) and a profiling device (26; 46) having radially projecting profiling sections (27; 47), **characterised in that** the mixing device (22; 42) has radially projecting wing elements (23) which are configured planar, and that the radially projecting profiling sections (27) are axially offset relative to one another.

2. Fastening element according to claim 1, **characterised in that** the maximum radial extent (R) of the profiling device (26; 46) in the region of the radially projecting profiling sections (27; 47) is in the range of 1.02 times to 1.2 times the nominal diameter (N) of the bore hole (7).

3. Fastening element according to claim 1 or 2, **characterised in that** the mixing device (22; 42) and the profiling device (26; 46) are provided at a separate element (21; 41) which comprises a coupling section (30; 50) for coupling to the fastening element (11).

4. Fastening element according to claim 3, **characterised in that** the coupling section (50) comprises a thread section which can be screwed to a counter-thread section at the fastening element (11).

5. Fastening element according to one of the claims 1 to 4, **characterised in that** the radially projecting profiling sections (47) are thread sections.

6. Fastening element according to one of the claims 1 to 4, **characterised in that** the radially projecting profiling sections (27) are radially flexibly mounted.

7. Fastening element according to one of the claims 1 to 6, **characterised in that** profiling device (26) comprises a base section (29) from which distancing sections (28) extent, at least one of the radially projecting profiling sections (27) being provided at the free end of each cf said distancing sections (28).

8. Fastening element according to one of the claims 1 to 7, **characterised in that** at least the radially projecting profiling sections (27; 47) have a hardness of at least 700 HV.

## Revendications

1. Elément de fixation pour l'ancrage dans un trou de forage (7) à l'aide d'une masse durcissable (31) avec une tige (13) s'étendant le long d'un axe longitudinal (12), un dispositif de mélange (22 ; 42) et un dispositif de profilage (26 ; 46) doté de sections de profilage (27 ; 47) s'élevant radialement, **caractérisé en ce que**
le dispositif de mélange (22 ; 42) présente des éléments de pale (23) s'élevant radialement qui sont réalisés en deux dimensions, et
les sections de profilage (27) s'élevant radialement sont décalées axialement les unes par rapport aux autres.

2. Elément de fixation selon la revendication 1, **caractérisé en ce que** la dimension radiale maximale (R) du dispositif de profilage (26 ; 46) correspond dans la zone des sections de profilage (27 ; 47) s'élevant radialement à 1,02 à 1,2 fois le diamètre nominal (N) du trou de forage (7).

3. Elément de fixation selon la revendication 1 ou 2, **caractérisé en ce que** le dispositif de mélange (22 ; 42) et le dispositif de profilage (26 ; 46) sont prévus sur un élément séparé (21 ; 41) qui présente une section de couplage (30 ; 50) pour le couplage avec l'élément de fixation (11).

4. Elément de fixation selon la revendication 3, **caractérisé en ce que** la section de couplage (50) comporte une section filetée qui peut être vissée avec une section filetée antagoniste sur l'élément de fixation (11).

5. Elément de fixation selon l'une quelconque des revendications 1 à 4, **caractérisé en ce que** les sections de profilage (47) s'élevant radialement sont des sections filetées.

6. Elément de fixation selon l'une quelconque des revendications 1 à 4, **caractérisé en ce que** les sections de profilage (27) s'élevant radialement sont radialement logées de manière élastique.

7. Elément de fixation selon l'une quelconque des revendications 1 à 6, **caractérisé en ce que** le dispositif de profilage (26) présente une section de fond (29), de laquelle des sections d'écartement (28) s'élèvent, sur les extrémités libres desquelles respectivement au moins l'une des sections de profilage (27) s'élevant radialement est prévue.

8. Elément de fixation selon l'une quelconque des revendications 1 à 7, **caractérisé en ce qu'**au moins les sections de profilage (27 ; 47) s'élevant radialement présentent une dureté d'au moins 700 HV.
